# DEMANDE DE BREVET EUROPEEN

(11) **EP 1 271 817 A1**
(43) Date de publication de la demande: **02.01.2003**
(21) Numéro de dépôt: 02291350.3
(22) Date de dépôt: 03.06.2002
(51) Int. Cl.: H04H 1/00, H04B 7/185, H04L 12/18

(54) **Procédé et dispositif d'allégement de la charge de signalisation dans un réseau, qui utilise un protocole "pluri-transmission"**

(30) Priorité: 18.06.2001 FR 0107956
(71) Demandeur: ALCATEL, 75008 Paris (FR)
(72) Inventeur: Couty, Richard, 95120 Ermont (FR)
(74) Mandataire: Smith, Bradford Lee

(57) **Abrégé**

L'invention concerne la transmission de paquets de donnée en mode de "pluri-transmission", les paquets étant émis depuis un côté émission (E) d'un support de transmission (80) et reçus par des terminaux (TS1-TSr) à un côté réception (R) de ce support. Elle trouve application notamment dans des réseaux où les terminaux (TSi-TSj) ne peuvent s'écouter mutucllement, ce qui est par exemple le cas avec les réseaux satellite, alors que la gestion implique l'émission (E20) d'un message d'interrogation vers les terminaux afin de déterminer la présence d'un groupe (G) de terminaux actifs en fonction de la réception (E32) d'au moins un message de réponse provenant d'un terminal du groupe. 11 est alors prévu l'émission (E34) depuis le côté émission (E) et vers les terminaux (TSi-TSj) d'un signal, de préférence le retour de cette réponse, pour indiquer la réception d'au moins un message de réponse du groupe de terminaux, afin que les terminaux n'ayant pas émis de message de réponse puissent agir en conséquence, notamment en interrompant leur propre processus d'émission de réponse.

Ce procédé peut s'intégrer de façon transparente au protocole IGMP et la norme RFC 1112 qui régit les modalités de la pluri-transmission (multicast) de paquets de données.

Il est également prévu un dispositif, éventuellement intégré à un routeur, permettant de réaliser cette gestion.

## Description

L'invention concerne la transmission de paquets de données sur réseau selon un mode dit de "pluri-transmission" (généralement connu par le terme anglais de "multicast"), et plus particulièrement dans le cadre de réseaux de terminaux dont le support de transmission ne permet pas à un terminal d'écouter les messages émis par un autre, ce qui est le cas notamment avec des réseaux de terminaux satellites et analogues.

La pluri-transmission permet à une source émettrice de faire diffuser les un mêmes paquets de données à chaque terminal d'un groupe désigné de terminaux destinataires sur un réseau, et ceci en un seul envoi. Elle est fait l'objet d'un protocole de transmission spécifique, notamment dans le cadre du réseau Internet, qui a été élaboré dans l'optique de terminaux reliés sur des réseaux locaux câblés, de type « en diffusion », tels que Ethernet, qui permettent une écoute entre les terminaux. Le protocole exploite cette possibilité d'écoute pour alléger le trafic de messages d'acquittement émis par les terminaux destinataires, comme il sera expliqué plus bas. L'objet de l'invention est d'ouvrir cette possibilité également aux réseaux de terminaux satellite ou analogues qui ne permettent pas une telle écoute entre terminaux.

L'offre de services en pluri-transmission en est aujourd'hui à ses débuts, l'optimisation de la bande passante Internet ayant été considérée comme secondaire pour son essor. La croissance galopante de la bande passante requise pour les services Internet, du fait de l'engouement du public et du développement rapide de l'offre de services, commence à faire apparaître le côté incontournable de la diffusion par pluri-transmission.

Les systèmes satellites ont l'avantage naturel d'offrir des services de type point-multipoints (ce qui explique leur succès pour les services de diffusion vidéo en direct par satellite "DVB-S"), et sont donc en très bonne position pour le nouveau marché de la pluri-transmission. Ce marché manifeste aujourd'hui une croissance et un intérêt que l'on peut comparer à la percée du "web" il y a quelques années. Les applications clientes de la pluri-transmission sont nombreuses :
- diffusion de programmes télévisuels,
- diffusion de quotations boursières en temps réel,
- visioconférences,
- commerce en ligne (enchères),
- distribution de stocks,
- etc.

La pluri-transmission est déjà mise en oeuvre dans le cadre des réseaux Internet câblés, où elle est normalisée par l'organisme IETF (Internet Engineering Task Force) au travers des cahiers des charge RFC 1112 et RFC 2236 (RFC étant un acronyme anglais pour "Request for Comments", soit "appel aux commentaires"), représentant respectivement les versions 1 et 2 du protocole IGMP (acronyme anglais pour "Internet Group Management Protocol", soit protocole Internet de gestion de groupes).

Conformément à ce protocole, les terminaux récepteurs n'ont pas qu'un rôle passif, mais doivent émettre des messages spécifiques et entendre, avec un délai très faible, les transmissions des autres terminaux connectés au même support de transmission.

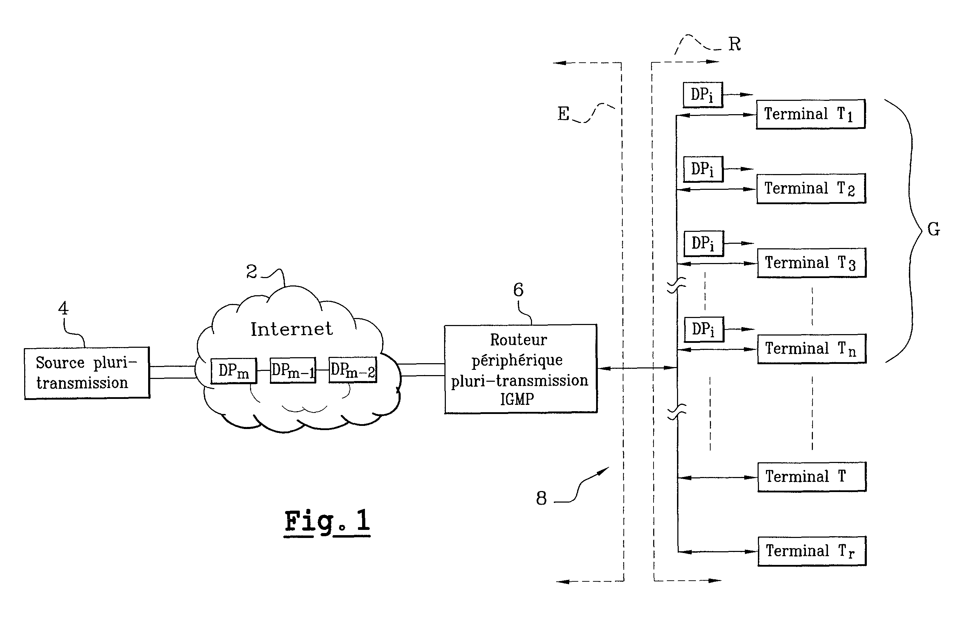

La figure 1 illustre de manière schématique le principe de la communication de données en pluri-transmission prévu par le protocole IGMP (Internet Group management Protocol) de l'IETF (Internet Engineering Task Force) sur un support de transmission câblé « en diffusion », tel que réseau le Ethernet.

Les données de pluri-transmission sont émises sous forme de paquets successifs (..., DPₘ₋₂, DPₘ₋₁, DPₘ, ...) sur le réseau Internet 2 depuis une source 4 vers un routeur périphérique de pluri-transmission 6 (aussi connu sous le terme anglais de "multicast edge router") conformément au protocole IGMP. Ce dernier a la responsabilité de retransmettre les paquets de données de pluri-transmission reçus du réseau Internet 2 vers le sous-réseau câblé 8 au sein duquel il est responsable de cette diffusion. Le sous-réseau 8, par exemple un réseau Ethernet, relie un nombre r de terminaux T1-Tr de manière à permettre :
- la réception quasi simultanée, par chaque terminal membre d'un groupe de pluri-transmission, d'un même paquet de données de pluri-diffusion DPi retransmis par le routeur périphérique 6,
- la transmission de messages d'un terminal quelconque vers le routeur périphérique 6,
- l'écoute par un terminal quelconque des messages transmis vers le routeur par tout autre terminal, et
- l'échange de données entre les terminaux.

Dans ce qui suit, on désigne deux côtés du support de transmission qui assure une transmission en pluri-diffusion :
- le côté envoi des données de pluri-diffusion, soit généralement le côté du routeur 6 ou d'une passerelle d'accès au support. Ce côté est repéré par la lettre E ; et
- le côté réception des données de pluri-diffusion, soit généralement le côté à l'entrée des terminaux T1-Tn. Ce côté est repéré par la lettre R. Pour une séance donnée de pluri-transmission, le routeur 6 identifie le groupe G de terminaux participants, auxquels les paquets de données doivent être transmis. Le groupe G de terminaux participant est identifié par une adresse dans chaque paquet DP reçu par le routeur 6. Ce groupe G peut concerner un nombre variable et évolutif de terminaux, allant d'un seul à l'intégralité des terminaux servis par le routeur. Dans l'exemple de la figure 1, le groupe G est constitué de n terminaux T1-Tn, représentés en cours de réception du même paquet de données DPi. On note que plusieurs groupes de pluri-transmission différents peuvent être servis par un même routeur 6, certains terminaux pouvant par ailleurs participer à plusieurs groupes simultanément. De même, la source de pluri-transmission 4 peut transmettre les paquets de données à plusieurs routeurs périphériques différents.

La problématique principale du routeur périphérique de pluri-transmission 6 est de déterminer s'il doit ou non faire suivre les paquets reçus. Sa préoccupation est donc de savoir s'il existe au moins un terminal participant au groupe identifié par l'adresse du paquet de pluri-transmission qu'il vient de recevoir du réseau Internet 2.

Le protocole IGMP précité et défini par l'IETF, sous la référence RFC 1112, comporte un mécanisme de maintien de groupes permettant à un routeur de pluri-transmission local de savoir s'il y a toujours des terminaux membres (au moins un) pour un groupe de pluri-transmission donné dans le sous-réseau 8. Ceci lui permet de décider s'il doit toujours acheminer le trafic de ce groupe vers le réseau ou s'il doit arrêter.

Ce mécanisme consiste simplement à ce que le routeur 6 envoie périodiquement une interrogation établie par l'IGMP, dite "d'interrogation d'appartenance" (de l'anglais "membership query"). Cette interrogation est captée par tous les terminaux T1-Tr connectés au réseau local 8. Un terminal qui souhaite rester ou devenir membre d'un groupe G doit répondre au routeur 6 avec un message dit "de rapport d'appartenance" (de l'anglais "membership report") pour lui indiquer qu'il est toujours intéressé par le trafic de ce groupe.

La norme précise que le routeur n'a nul besoin de la liste exhaustive de tous les terminaux membres, mais uniquement de savoir s'il y en a au moins un, ou aucun. Par conséquent, il apparaît inutile que tous les membres répondent à l'interrogation, dérangent les autres participants pour le décodage de leur propre réponse et créent également une surcharge sur le réseau.

Une seule réponse suffisant à renseigner le routeur 6, la norme spécifie que chaque terminal, à la réception de l'interrogation, déclenche un temporisateur d'une durée aléatoire avant de répondre. Pendant ce temps, chaque terminal écoute la ligne pour guetter le passage d'une réponse provenant de tout autre terminal. Si le temporisateur d'un terminal expire alors qu'aucune réponse n'a été aperçue sur la ligne, alors seulement ce terminal envoie sa réponse. Cette réponse est aperçue par les autres terminaux qui réagissent en interrompant leur temporisateur sans transmettre leur réponse. Cette disposition assure ainsi qu'à chaque interrogation envoyée par le routeur périphérique 6, une seule réponse est retournée, quelque soit la constitution du groupe de terminaux, et le problème de surcharge est évité.

On comprend que l'avantage visée par la norme RFC 1112 ne peut être exploitée lorsque le sous-réseau (tel qu'un réseau de terminaux satellite ou analogue) ne permet pas à un terminal de guetter les réponses émises vers le routeur 6 par un autre terminal.

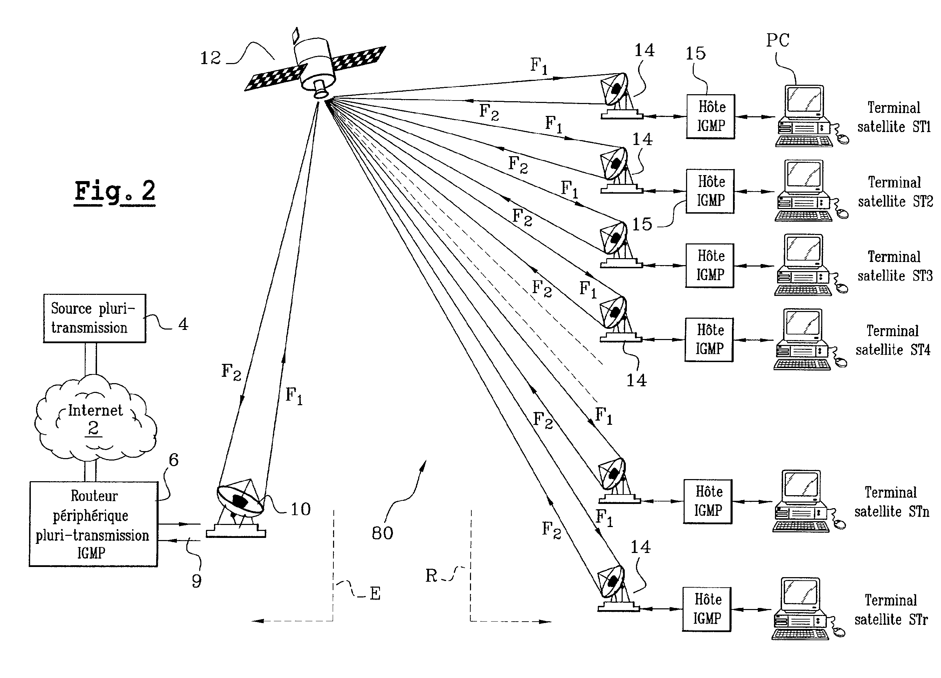

L'organisation d'un tel sous-réseau et son fonctionnement en pluri-transmission seront décrits dans le cadre d'un réseau de terminaux satellite, par référence à la figure 2. Le système de communication est semblable de celui de la figure 1, à la différence que le sous-réseau 80 est constitué par des voies de communication par satellite.

L'exemple est basé sur une architecture de réseau d'accès par satellite du type A 9780 NG. La source de données de pluri-transmission 4 est reliée à un routeur périphérique 6 conforme au protocole IGMP par le réseau Internet 2, étant compris que cette source peut être cependant reliée au routeur par tout autre voie de communication.

Le routeur 6 communique avec les terminaux satellite ST1-STr via une station terrestre 10, connu par le terme de "passerelle", comprenant un émetteur-récepteur associé à une antenne satellite, la passerelle et le routeur étant reliés par un câble de transmission bidirectionnel 9 ou analogue. La passerelle 10 établit une liaison de communication sur un satellite de télécommunication géostationnaire 12 qui sert de relais pour l'ensemble des terminaux satellite ST1-STr. Chaque terminal satellite ST comprend une parabole avec ses circuits d'émission-réception haute fréquence 14 reliée à un ordinateur personnel PC ou autre équipement de communication via un hôte au protocole IGMP 15. Le routeur 6 peut donc émettre des paquets de données en pluri-transmission vers les terminaux satellite et recevoir des messages émis par ces derniers.

Le satellite 12 fournit, pour chaque réseau local 80 caractérisé par sa fréquence porteuse radio :
- une liaison aller depuis une passerelle 10 vers les terminaux satellite ST en écoute de cette fréquence porteuse radio (désignée f1), et
- une liaison retour sur une autre fréquence porteuse radio (désignée f2), associée à la liaison aller, pour véhiculer les messages depuis les terminaux satellite ST vers la passerelle 10.

Chaque terminal satellite peut recevoir (ou plus exactement entendre) tous les messages de la liaison aller, y compris ceux destinés aux autres terminaux, mais seule la passerelle 10 peut recevoir les messages d'un terminal. Ceci s'explique par le fait que les canaux utilisent le plus souvent une fréquence de réception f1 (commune à tous les terminaux) nécessairement différente de leur fréquence de transmission f2 (commune ou non à tous les terminaux), ce qui ne leur permet pas d'entendre les émissions des autres terminaux. (Il est à noter que l'idée consistant à ajouter dans le terminal satellite le moyen d'écouter cette seconde fréquence ne peut être réalisée, qu'au prix d'éléments matériels relativement coûteux dont une seconde chaîne de réception et un duplexeur).

De la sorte, seule la passerelle 10 peut recevoir les réponses "rapport d'appartenance" des terminaux satellite ST, alors que tous ces terminaux reçoivent le message "interrogation d'appartenance" émis une seule fois par la passerelle 10 et portant soit l'adresse de pluri-transmission de tous les terminaux, soit l'adresse de pluri-diffusion du groupe pour lequel elle émet ce message "d'interrogation d'appartenance".

En outre, les systèmes de transmission par satellites géostationnaires induisent un retard minimal de 270 millisecondes (ms) environ entre l'émission par la source (routeur périphérique 6) et la réception par le destinataire (terminal ST), ce qui rend la solution IETF encore plus inapplicable.

Pour ces raisons, le mécanisme standard utilisé pour les sous-réseaux câblés, basé sur la surveillance entre terminaux et l'interruption de l'émission des réponses par les terminaux régie par temporisation, ne peut malheureusement pas fonctionner sur un lien satellite ou analogue qui relie les terminaux à un routeur (ou fonction) IGMP central, qu'il soit situé derrière une passerelle ou dans un centre de gestion du réseau satellite (NCC). En appliquant la norme RFC 1112 de façon standard, les voies retour des canaux satellites subiront périodiquement une surcharge (que la norme RFC 1112 permet d'éviter pour les réseaux à support de transmission en diffusion) due à ce trafic de réponse aux interrogations envoyées.

A titre d'exemple, et pour donner des ordres de grandeurs, en considérant un système tel que 5000 groupes de pluri-transmission transitent à travers le sous-réseau satellite 80 et que chaque groupe est capté par 2000 membres, il en ressort qu'à chaque période de l'interrogation (en moyenne chaque minute selon la valeur moyenne proposée dans la norme RFC 1112), un volume de trafic de réponses de 5000 x 2000 paquets est généré. En prenant le cas plutôt favorable d'un paquet radio ayant une taille de 55 octets, cela induit un débit moyen - donc une bande passante - de 75 Mbit/s environ.

De plus, ce trafic n'est pas uniformément réparti sur toute la période d'une minute. La version 2 d'IGMP permet au routeur 6 de demander aux terminaux ST une réponse dans un délai maximum de 25,6 secondes. Si une valeur plus faible est choisie, par exemple 5 secondes, le trafic est concentré sur cette durée plus faible de 5 secondes.

Or, une des caractéristiques fondamentales des systèmes à transmissions radiofréquences est la limitation de la bande de fréquences utilisable pour chacun de ces systèmes. La capacité de transmission de ces derniers est fondamentalement liée à la bande des fréquences allouée. Optimiser la capacité de transmission en minimisant le nombre, la taille ou la durée des messages est une préoccupation constante des concepteurs de systèmes à transmissions radiofréquences.

Au vu de ce qui précède, un objet de l'invention est de permettre aux systèmes de communication sur un réseau dont le support de transmission n'est pas de type « en diffusion », qui ne permettent donc pas l'écoute entre terminaux, de bénéficier néanmoins des dispositions visant à réduire les redondances de messages de réponse des autres terminaux en pluri-transmission.

Selon un premier aspect, l'invention prévoit un procédé de gestion de la communication de paquets de données en mode de pluri-transmission, les paquets étant émis depuis un côté émission d'un support de transmission et reçus par des terminaux à un côté réception de ce support, dans lequel procédé on émet un message d'interrogation vers les terminaux afin de déterminer la présence d'un groupe actif de terminaux en fonction de la réception d'au moins un message de réponse provenant d'un terminal du de ce groupe,
caractérisé en ce qu'il comprend l'étape d'émission depuis ledit côté émission et vers lesdits terminaux d'un signal indiquant la réception, au côté émission, d'au moins un message de réponse provenant d'un terminal du dudit groupe de terminaux, afin que les terminaux n'ayant pas émis de message de réponse puissent agir en conséquence, notamment en interrompant leur propre processus d'émission de réponse.
Avantageusement, la gestion est réalisée conformément au protocole IGMP ("Internet Group Management Protocol"), ledit message d'interrogation étant le message "interrogation d'appartenance" ("membership query") et ledit message de réponse étant le message "rapport d'appartenance" ("membership report").

L'émission d'un message de réponse par un terminal du groupe peut être alors régie par le protocole RFC ("Request for Comments") 1112 dudit protocole IGMP.

Avantageusement, le signal émis depuis le côté émission est le retour vers les terminaux d'au moins un message de réponse provenant du groupe.

L'étape d'émission peut alors consister à retourner systématiquement vers les terminaux chaque message de réponse reçu du groupe, ou bien à retourner vers les terminaux un nombre de messages de réponse reçus inférieur au total des messages de réponse reçu provenant d'un terminal du groupe, pour alléger le trafic de données.

Dans ce dernier cas, le nombre de messages de réponse reçus retournés peut être une fraction (1/N) du nombre total des messages de réponse reçus, où N est un nombre fixe ou évolutif.

A titre d'exemple, on peut faire évoluer la valeur N de manière dynamique en fonction des conditions d'utilisation du réseau afin de maintenir sensiblement constant le nombre de messages de réponse reçus retournés lors de l'étape d'émission, pour chaque message d'interrogation émis.

Typiquement, le signal est émis via une passerelle d'une liaison radiofréquence qui sert à diffuser lesdits paquets de données (DP) en pluri-transmission utilisant, pour la réception desdits paquets de données (DP) émis en pluri-transmission par les terminaux du support de transmission, pour lequel cette passerelle est responsable des mécanismes de pluri-transmission de type « pluridiffusion IGMP », le support de transmission ne permettant pas l'écoute mutuelle entre terminaux .

Il peut s'agir notamment d'une liaison par satellite, les terminaux étant alors des terminaux satellites, l'émission des paquets de données en pluri-transmission et l'émission du signal s'effectuant sur une liaison aller à une première fréquence porteuse, et l'émission du ou des message(s) de réponse par le groupe de terminaux satellite s'effectuant sur une liaison retour à une deuxième fréquence porteuse différente de la première.

L'étape précitée d'émission peut être effectuée par une unité de gestion entre, ou à, la passerelle et un routeur qui émet les paquets de données en mode de pluri-transmission vers les terminaux.

L'unité de gestion peut alors transmettre au routeur au moins un des messages de réponse reçus du groupe de terminaux. On peut alors mettre en oeuvre le procédé de l'invention avec un routeur existant.

L'étape d'émission peut être également réalisée par des moyens fonctionnellement intégrés à un routeur qui émet les paquets de données de pluri-transmission vers les terminaux.

Selon un deuxième aspect, l'invention prévoit un dispositif de gestion destiné à intervenir dans un système de communication de paquets de données en mode de pluri-transmission selon lequel les paquets sont émis depuis un côté émission d'un support de transmission et reçus par des terminaux à un côté réception de ce support, mutuellement isolés, dans laquelle gestion on émet un message d'interrogation vers les terminaux afin de déterminer la présence d'un groupe actif de terminaux en fonction de la réception d'au moins un message de réponse provenant d'un terminal de ce groupe,
caractérisé en ce qu'il comprend des moyens de retour pour émettre depuis ledit côté émission et vers lesdits terminaux un signal indiquant la réception, au côté réception, d'au moins un message de réponse provenant d'un terminal dudit groupe de terminaux, afin que les terminaux n'ayant pas émis de message de réponse puissent agir en conséquence, notamment en interrompant leur propre processus d'émission de réponse.

Les aspects optionnels de l'invention présentés plus haut dans le cadre du procédé peuvent s'appliquer mutatis mutandis à ce dispositif.

Selon un troisième aspect, l'invention prévoit un routeur, caractérisé en ce qu'il intègre le dispositif précité.

L'invention et les avantages qui en découlent apparaîtront plus clairement à la lecture de la description suivante des modes de réalisation préférés, donnée purement à titre d'exemples non-limitatifs, par référence aux dessins annexés dans lesquels :
- la figure 1, déjà décrite, est un schéma simplifié d'un système connu de pluri-transmission de paquets de données sur réseau Internet et sur un réseau local câblé, tel que Ethernet, permettant aux terminaux communicants de s'écouter ;
- la figure 2, déjà décrite, est un schéma simplifié d'un système de transmission de paquets de données via un réseau de terminaux satellite servi par une passerelle, qui constitue un exemple de terminaux communicants ne pouvant pas s'écouter, et pour lequel l'invention peut être mise en oeuvre dans le cadre d'une diffusion en pluri-transmission ;
- la figure 3 est un organigramme servant à expliquer le principe de l'invention dans le cadre du système de la figure 2 ;
- la figure 4 est un organigramme d'une première variante appliquée au concept présenté à la figure 3 ;
- la figure 5 est un organigramme d'une deuxième variante appliquée au concept présenté à la figure 3 ;
- la figure 6 reprend une partie du schéma de la figure 2 pour montrer une première implantation fonctionnelle possible d'une unité de gestion de retours de réponses IGMP conforme à l'invention ; et
- la figure 7 reprend une partie du schéma de la figure 2 pour montrer une deuxième implantation fonctionnelle possible d'une unité de gestion de retours de réponses IGMP conforme à l'invention

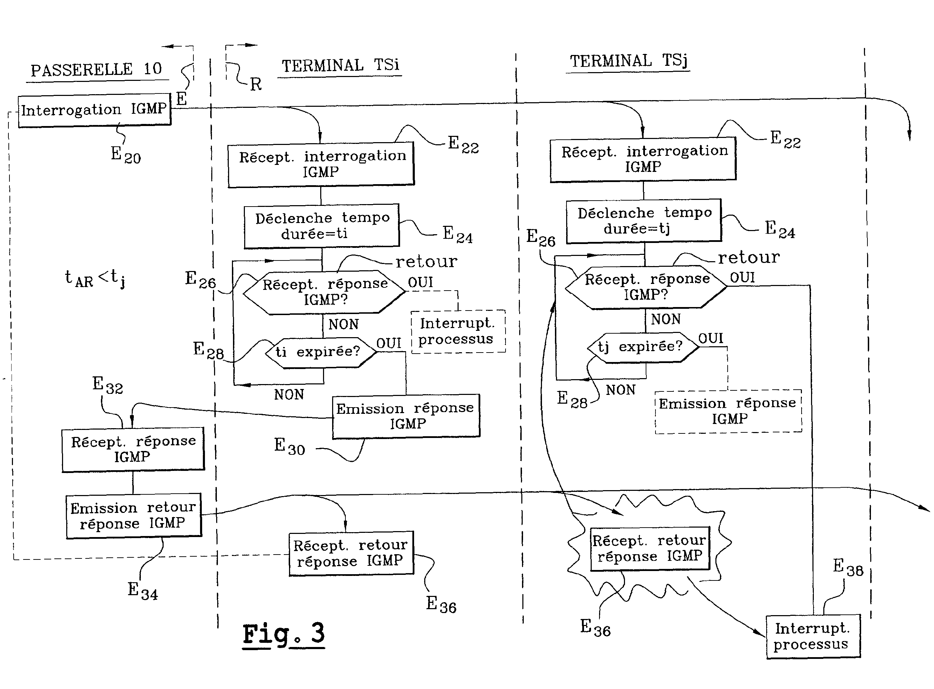

L'organigramme de la figure 3 indique les principales étapes réalisées au niveau de la passerelle 10 et de deux terminaux satellite TSi et TSj parmi un groupe de terminaux actifs, c'est-à-dire participant à une séance de pluri-transmission de paquets de données émis depuis cette passerelle. Le système de transmission de données est analogue à celui de la figure 2 et ne sera pas décrit de nouveau par souci de concision. Les terminaux TSi et TSj reçoivent donc les paquets de données de pluri-transmission aiguillés par le routeur satellite IGMP 6, et ont la possibilité d'émettre des messages vers ce dernier, par liaison satellite via la passerelle 10.

Les terminaux sont typiquement des ordinateurs personnels PC, chacun relié via un hôte IGMP 15 respectif à un émetteur-récepteur satellite doté d'une parabole 14. L'ensemble constitué de l'hôte 15 et de l'ordinateur intègre des moyens matériels et logiciels permettant d'assurer la gestion de la réception de paquets de données en pluri-transmission conformément au protocole IGMP et à la norme RFC 1112 décrits plus haut. A cette fin, chaque terminal satellite comporte un temporisateur permettant de fixer un intervalle de temps aléatoire (d'une valeur comprise entre 0 secondes et le temps de réponse maximum défini par le routeur satellite IGMP 6 dans le message "d'interrogation d'appartenance") entre la réception d'un message de "interrogation d'appartenance" ("membership query"), désigné ci-après "interrogation IGMP", et l'émission conditionnelle d'une réponse de "rapport d'appartenance" ("membership report"), désignée ci-après "réponse IGMP".

Le processus commence par l'émission depuis la passerelle 10 (soit le côté émission E) d'une interrogation IGMP à destination du groupe comprenant les terminaux TSi et TSj, établie conformément à la norme RFC 1112 (étape E20). Cette interrogation est reçue avec un retard d'environ 270 millisecondes (ms) par chacun des terminaux du groupe (étape E22).

A la réception de cette interrogation, chaque terminal arme son temporisateur pour établir l'intervalle de temps aléatoire précité (étape E24). Dans l'exemple, les intervalles (soit les temporisations) pour les terminaux TSi et TSj ont respectivement les valeurs ti et tj, avec l'intervalle ti étant le plus court de tous le terminaux du groupe, d'où la condition tj > ti.

Ensuite, les terminaux guettent la présence d'une éventuelle réponse IGMP provenant d'un autre terminal (étape E26) en vérifiant que leur intervalle de temps n'a pas expiré (étape E28), à l'instar du processus de la norme RFC 1112 appliqué à un réseau câblé tel que décrit dans le cadre de la figure 1. On note que les couches protocolaires des terminaux satellite pour gérer les messages d'interrogation et de réponse IGMP sont les mêmes que celles d'un terminal fonctionnant sur réseau câblé. Toutefois, conformément à l'invention, l'étape E26 de guetter les réponses s'effectue non pas par écoute des autres terminaux sur le même canal de transmission (la fréquence f2) - cela étant impossible - mais par écoute du canal de réception, à savoir le canal de liaison aller à la fréquence porteuse f1, comme il apparaîtra plus loin.

A l'expiration de l'intervalle ti, le terminal TSi émet sa réponse IGMP (soit depuis le côté réception R des données de pluri-diffusion), toujours en conformité avec la norme RFC 1112 (étape E30). Cette émission est réalisée sur la liaison retour à la fréquence porteuse f2, de sorte que seule la passerelle 10 peut la détecter.

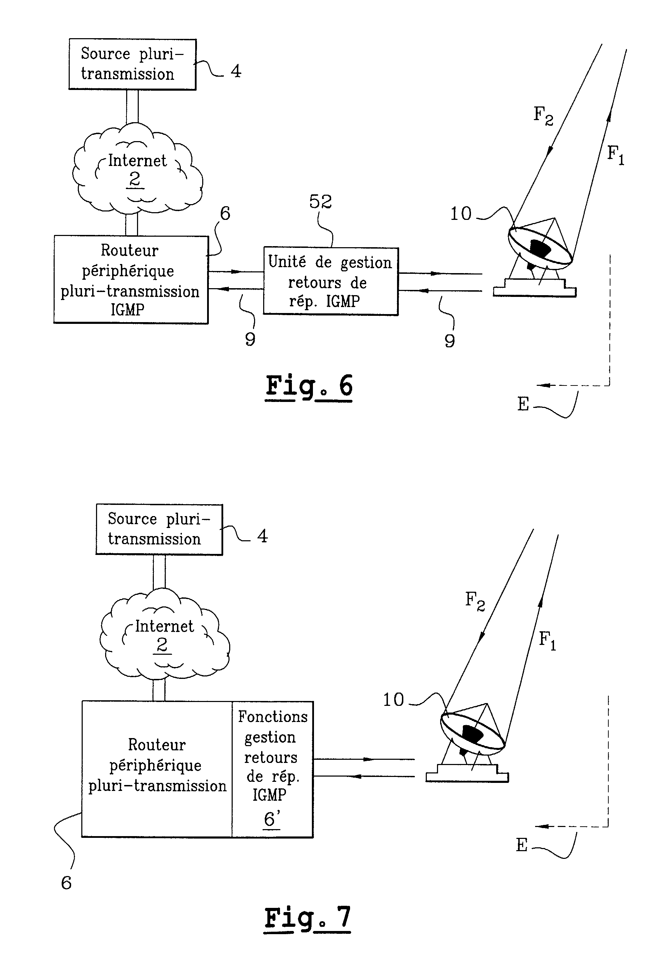

Conformément à l'invention, à la réception de la réponse IGMP par la passerelle 10 (étape E32), ladite réponse est automatiquement retournée (depuis le côté émission E) telle quelle en pluri-transmission sur la liaison aller vers tous les terminaux du groupe par (étape E34). Ce retour de réponse IGMP est géré par une unité du côté de la passerelle 10 de la liaison satellite, comme il sera décrit par référence aux figures 6 et 7.

De la sorte, la réponse IGMP initialement émise par le terminal TSi est reçue par retour par tous les terminaux du groupe, après un délai sensiblement égal à un aller-retour sur la liaison satellite, soit 2x270 ms = 540 ms.

Ainsi, en supposant que l'intervalle tj pour le terminal TSj n'a toujours pas expiré durant ce délai, ce terminal va être en mesure de réagir à la réception du retour de la réponse IGMP en interrompant son processus de temporisation (étape E38), sans émettre sa propre réponse IGMP. Plus précisément, le terminal Tj détruira son message de réponse IGMP avec l'interruption de la temporisation.

On comprendra que tous les autres terminaux du groupe dont la temporisation n'est toujours pas arrivée à échéance lors de la réception du retour de la réponse IGMP agiront comme le terminal Tj. Seuls les terminaux pour lesquels l'intervalle de temps aléatoire est suffisamment proche de ti (soit environ ti + 540 ms ou moins) pour qu'ils arrivent à échéance avant la réception du retour de réponse à l'étape E36 précitée continueront à émettre leur réponse IGMP. Bien entendu, chaque terminal du groupe a la possibilité d'avoir à un moment donné l'intervalle de temps aléatoire ti le plus court. Aussi, chaque terminal est capable de réaliser les étapes de transmission de réponse IGMP (E30) et d'interruption du processus (E38) le cas échéant (cf. cases en pointillées).

L'invention permet de réduire très fortement le nombre de réponses IGMP émises sur la liaison retour par rapport à une approche classique selon laquelle tous les terminaux participant du groupe émettraient systématiquement leur réponse IGMP à échéance de leur temporisation. Le gain correspondant en termes de libération de bande passante sur la liaison retour peut être évalué selon le calcul suivant.

On suppose que la valeur de l'intervalle de temps aléatoire démarré à l'étape E24 précitée pour l'ensemble des terminaux du groupe est distribuée uniformément entre 0 et une valeur limite transmise par le routeur 6 aux terminaux dans le message qui comporte l'interrogation IGMP. Cette valeur est au maximum égale à 25,6 secondes ; si on utilise cette valeur maximale, et prenant comme délai entre l'émission de la réponse IGMP par le premier terminal arrivant à échéance (étape E30) et la réception du retour de cette réponse (étape E36) un temps d'aller-retour sur la liaison satellite, soit environ 2 x 0,27s, le pourcentage de terminaux du groupe ayant émis leur propre réponse IGMP sera égal à 100 x 2 x 0,27/25,6, soit environ 2,1%.

Des valeurs plus basses que cette valeur maximale de 25,6 secondes peuvent bien entendu être utilisées pour optimiser le rendement du procédé selon la charge et la configuration du réseau. L'efficacité du procédé diminue toutefois avec la diminution de cette valeur.

En ce qui concerne la liaison aller (de la passerelle 10 vers les terminaux TS), l'émission des retours de réponse IGMP (étape E34) qu'implique le procédé conforme à l'invention n'entraîne qu'une très faible surcharge de trafic, du même ordre que le trafic des réponses IGMP sur la liaison retour (2%). Même en faisant le cumul des réponses IGMP sur les voies aller et retour, le bilan reste toutefois très favorable : 2 x 2% contre 100%).

Le procédé conforme à l'invention a l'avantage de n'avoir aucun impact ni sur la pile protocolaire IGMP présente dans le terminal utilisateur PC et/ou l'hôte 15, ni sur la pile protocolaire du routeur IGMP 6 présent du côté de la passerelle 10. Il peut ainsi être mis en oeuvre de manière parfaitement transparente avec des équipements de routeur et de terminaux prévus pour appliquer la norme RFC 1112 pour des réseaux câblés ou analogues.

Dans le mode de réalisation de la figure 3, chaque réponse reçue au niveau de la passerelle 10 (étape E32) est retournée systématiquement vers les terminaux (étape E34).

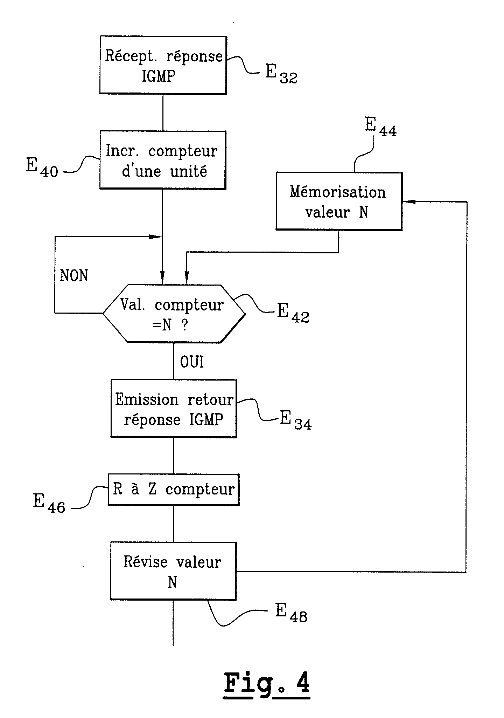

Selon une variante de l'invention, décrite par référence à l'organigramme de la figure 4, on effectue du côté de la passerelle 10 un filtrage des retours de réponse IGMP de sorte que seule une réponse sur N réponses reçues à l'étape E32 est retournée à l'étape E34, où N est un nombre constant ou évolutif de façon dynamique.

L'organigramme de la figure 4 explique les étapes réalisées du côté de la passerelle 10. A la réception de chaque réponse IGMP (détectée à l'étape E32), en commençant par la première (du terminal TSi), un compteur est incrémenté d'une unité (étape E40) à partir d'une valeur initiale de zéro, et il est vérifié si la valeur totalisée par le compteur a atteint la valeur N précitée (étape E42). Dans l'exemple, cette valeur N est mémorisée (étape E44) de façon à pouvoir la faire évoluer le cas échéant. Tant que le nombre de réponses reçues reste inférieur à N, le procédé reste en attente de la réception de la réponse suivante.

C'est seulement lorsque le nombre N est atteint que le procédé passe à l'étape E34 d'émission du retour de la réponse IGMP. Le compteur est alors remis zéro (étape E46), on continue le cycle de comptabilisation des réponses reçues (étapes E40 et suivantes). De la sorte, seule une fraction 1/N des réponses IGMP reçues font l'objet d'un retour vers les terminaux du groupe.

A chaque cycle, le procédé peut réviser la valeur de N (étape E48) selon différents critères pour tenir compte par exemple de l'évolution du groupe de terminaux participants, du trafic, du degré de fiabilité requis, etc. Cette révision peut être basée notamment sur le nombre total de retours effectués à l'étape E34 suite à l'émission de l'interrogation IGMP correspondante (étape E20, figure 3). La valeur N peut être ajustée, par exemple, de sorte que ce nombre absolu de retours reste sensiblement constant malgré les variations dans le nombre de terminaux participants à la réception de paquets de données en pluri-transmission.

En ajoutant du côté de la passerelle 10 une telle fonction de filtration des retours de réponses IGMP sur la liaison satellite retour, de type "renvoi de 1 message sur N messages reçus", on peut réduire d'un rapport voisin de N la charge de trafic sur la liaison satellite aller. Le rapport n'est pas exactement égal à N car on retarde alors le renvoi du premier message réponse IGMP d'un temps égal à la valeur moyenne de réception des N premiers messages.

Par exemple, en prenant N = 10, on réduit d'environ 90% la charge de trafic de la liaison satellite aller induite par le procédé de l'invention dans sa forme décrite par référence à la figure 3. Cette charge ressort donc alors à 10% x 2% soit 0,2% de la charge initiale de la voie retour.

A titre illustratif, pour reprendre l'exemple donné en introduction d'une passerelle qui gère 5000 groupes de pluri-transmission, chacun capté par 2000 terminaux participants, les 2000 x 5000 = 10 millions de réponses IGMP potentiels seront réduits à 50000 réponses IGMP réels sur la liaison retour, et n'induiront qu'environ 5000 retours de réponse IGMP retransmis par la passerelle sur la voie aller. La bande passante initialement requise de 75 Mbits/s peut ainsi être réduite à 250 Kbits/s sur la voie retour, et le procédé n'induit qu'une charge de 25 Kbits/s sur la voie aller.

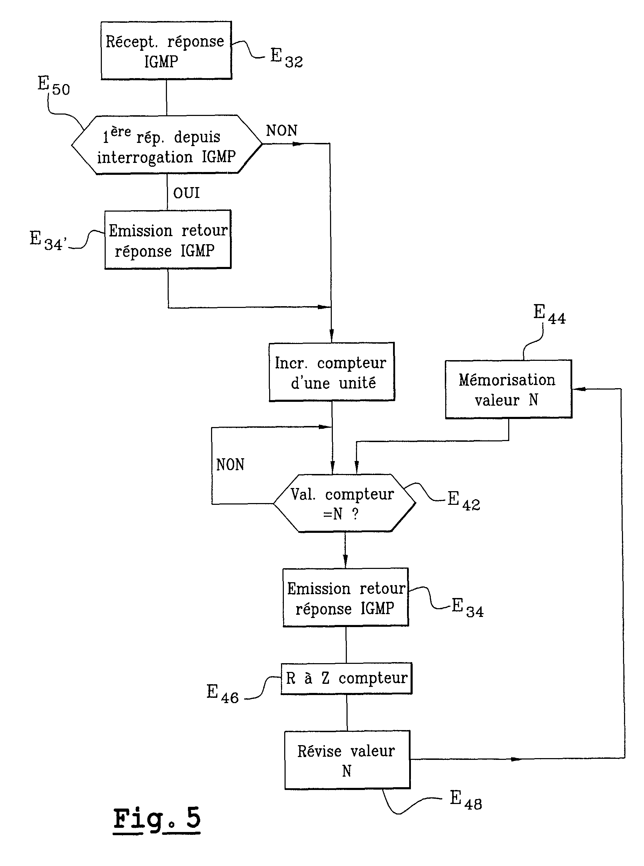

La figure 5 est un organigramme d'une autre variante, qui diffère de celle de la figure 4 par le fait que la première réponse IGMP reçue du côté de la passerelle 10 après l'émission d'une interrogation IGMP l'ayant provoquée est systématiquement retournée au démarrage de la comptabilisation. Cette disposition permet de réagir plus rapidement en évitant un premier comptage à N avant d'effectuer un retour de réponse, moyennant une étape supplémentaire de détection des interrogations IGMP émises dans le procédé.

Selon le procédé de la figure 5, on détermine (étape E50), après la réception d'une réponse IGMP à l'étape E32, s'il s'agit de la première réponse depuis l'émission de l'interrogation l'ayant provoquée. Si tel est le cas, cette réponse est immédiatement retournée vers les terminaux du groupe (étape E34') et le procédé continue ensuite de la même manière que pour la variante de la figure 4, en n'émettant qu'une réponse sur N. Les étapes E34-E48 sont identiques à celles de la figure 4 et ne seront pas répétées par souci de concision.

Le mécanisme de retour de réponses IGMP conforme à l'invention peut être mis en oeuvre soit par une unité spécifique de gestion de retours de réponses IGMP située entre le routeur 6 et la passerelle 10, soit par une intégration dans la pile protocolaire IGMP du routeur.

Cette première possibilité est représentée à la figure 6, où l'unité de gestion de retours de réponses IGMP 52 est installée sur la liaison de transmission bidirectionnel 9 ou analogue entre le routeur IGMP 6 et la passerelle 10. L'unité 52 comprend un microprocesseur et des interfaces de communication permettant d'accomplir les tâches de détection et de retour des réponses IGPM conformément au procédé selon les organigrammes de figures 3, 4 ou 5. L'unité 52 peut ainsi comprendre en outre des moyens d'analyse statistique des retours pour établir la valeur de N précitée selon des critères déterminés, et gérer les retours d'une réponse IGMP sur N reçues.

L'unité 52 assure également la transmission vers le routeur 6 des réponses IGMP reçues des terminaux TS, afin que le routeur puisse exploiter ces réponses pour gérer la pluri-transmission conformément aux modalités prévues par le protocole IGMP. L'invention prévoit plusieurs possibilités pour cette transmission des réponses IGMP vers le routeur :
- chaque réponse IGMP reçue des terminaux est systématiquement transmise vers le routeur 6. Ainsi, dans le cadre du mode de réalisation de la figure 3, l'unité 52 adresse chaque réponse IGMP reçue d'une part à tous les terminaux TS1-TSn du groupe concerné (étape E34) et d'autre part au routeur 6; ou
- une proportion seulement des réponses IGMP reçues des terminaux est transmise vers le routeur 6. Dans le cadre des variantes des figures 4 et 5, cette proportion peut être tout simplement égale à 1/N. L'unité 52 peut alors, à chaque retour de réponse IGMP adressée aux terminaux TS, adresser cette réponse en outre au routeur 6. On peut aussi prévoir que le nombre de réponses IGMP transmises au routeur 6 par l'unité 52 représente un proportion 1/M différente de 1/N, M étant un valeur fixe ou évolutive.

Bien entendu, ces possibilités sont indépendantes des variantes des figures 3 à 5, de sorte que l'unité de gestion des retours de réponses IGMP 52 peut, par exemple, transmettre les réponses IGMP sélectivement au routeur et systématiquement aux terminaux, ou inversement.

L'acheminement des réponses IGMP par l'unité 52 peut s'effectuer de manière très simple d'une part en identifiant cette réponse, par référence au champ correspondant dans le message réponse, et d'autre en routant ladite réponse, le cas échéant, vers les terminaux TS (pour réaliser l'étape E34 de retour) et/ou vers le routeur 6.

Dans le cas de la variante de la figure 5, l'unité 52 procède en outre à l'identification de l'interrogation IGMP envoyée par le routeur 6 pour établir le point de départ pour l'identification de la première réponse IGMP reçue (cf. étape E50), simplement par référence au champ correspondant de ce message.

Le fait de prévoir l'unité de gestion des retours de réponses IGMP 52 séparément du routeur 6 permet de mettre en oeuvre l'invention avec des routeurs préexistants, tels que ceux conçus pour un réseau câblé utilisant la norme RFC 1112.

La figure 7 illustre le cas du mécanisme de retour de réponses IGMP lorsqu'il est intégré dans la pile protocolaire IGMP du routeur. Les fonctionnalités décrites sont alors mises en oeuvre dans une section 6' du routeur 6, en tête de la liaison 9 vers la passerelle 10. Cette section 6' est gérée tout comme l'unité 52 de la figure 6, mais de manière centralisée par les moyens matériels et logiciels du routeur 6.

On comprendra que l'invention autorise de nombreuse autres variantes sans sortir du cadre des revendications.

Par exemple, au lieu d'émettre en retour depuis la passerelle vers les terminaux la réponse IGMP, on peut émettre un au autre message dont la réception par les terminaux aura un effet technique équivalent. Cet autre message peut être établi spécifiquement par convention entre les terminaux TS et le routeur 6 et/ou la passerelle 10 de sorte que sa réception par les terminaux provoque l'interruption de l'émission de la réponse IGMP.

Par ailleurs, l'invention n'est nullement limitée aux messages "interrogation d'appartenance" ("membership query") et "rapport d'appartenance" ("membership report"), selon la norme IGMP, ni au protocole RFC 1112 et RFC 2236, son champ d'application couvrant tout autre protocole et norme, présent et avenir, où les enseignements donnés peuvent s'appliquer de manière équivalente ou analogue.

## Revendications

1. Procédé de gestion de la communication de paquets de données (DP) en mode de pluri-transmission, les paquets étant émis depuis un côté émission (E) d'un support de transmission (80) et reçus par des terminaux (TS1-TSr) à un côté réception (R) de ce support, le support physique de cette transmission ne permettant pas l'écoute mutuelle entre les terminaux, procédé dans lequel on émet (E20) un message d'interrogation vers les terminaux afin de déterminer la présence d'un groupe actif (G) de terminaux en fonction de la réception (E32) d'au moins un message de réponse provenant d'un terminal du de ce groupe,
**caractérisé en ce qu'**il comprend l'étape d'émission (E34), depuis ledit côté émission (E) et vers lesdits terminaux (TS1-TSr), d'un signal indiquant la réception, au côté émission, d'au moins un message de réponse provenant d'un terminal du dudit groupe (G) de terminaux, afin que les terminaux n'ayant pas émis de message de réponse puissent agir en conséquence, notamment en interrompant leur propre processus d'émission de réponse.

2. Procédé la revendication 1, **caractérisé en ce que** la gestion est réalisée conformément au protocole IGMP ("Internet Group Management Protocol"), ledit message d'interrogation étant le message "interrogation d'appartenance" ("membership query") et ledit message de réponse étant le message "rapport d'appartenance" ("membership report").

3. Procédé selon la revendication 2, **caractérisé en ce que** l'émission d'un message de réponse par un terminal (TS1-TSr) du groupe (G) est régie par le protocole RFC ("Request for Comments") 1112 dudit protocole IGMP.

4. Procédé selon l'une quelconque des revendications 1 à 3, **caractérisé en ce que** ledit signal émis depuis le côté émission (E) est le retour vers les terminaux (TS1-TSr) d'au moins un message de réponse provenant d'un terminal dudit groupe (G).

5. Procédé selon la revendication 4, **caractérisé en ce que** l'étape d'émission (E34)consiste à retourner systématiquement vers les terminaux (ST1-STr) chaque message de réponse reçu provenant d'un terminal (TS1-TSr) du groupe (G).

6. Procédé selon la revendication 4, **caractérisé en ce que** l'étape d'émission (E34) consiste à retourner vers les terminaux (ST1-STr) un nombre de messages de réponse reçus inférieur au total des messages de réponse reçus.

7. Procédé selon la revendication 6, **caractérisé en ce que** le nombre de messages de réponse reçus retournés est une fraction (1/N) du nombre total des messages de réponse reçus, où N est un nombre fixe ou évolutif.

8. Procédé selon la revendication 7, **caractérisé en ce que** l'on fait évoluer la valeur N de manière dynamique en fonction des conditions d'utilisation du réseau (80) afin de maintenir sensiblement constant le nombre de messages de réponse reçus retournés lors de l'étape d'émission (E34), pour chaque message d'interrogation émis.

9. Procédé selon l'une quelconque des revendication 2 à 8, **caractérisé en ce que** ledit signal est émis via une passerelle (10) d'une liaison radiofréquence qui sert à diffuser lesdits paquets de données (DP) en pluri-transmission utilisant, pour la réception desdits paquets de données (DP) émis en pluri-transmission par les terminaux du support de transmission, pour lequel cette passerelle est responsable des mécanismes de pluri-transmission de type « pluri-diffusion IGMP », le support de transmission ne permettant pas l'écoute mutuelle entre terminaux .

10. Procédé selon la revendication 9, **caractérisé en ce que** ledit support de transmission (80) est une liaison radiofréquence par satellite (12), lesdits terminaux (ST1-STr) étant des terminaux satellites, l'émission des paquets de données (DP) en pluri-transmission et l'émission (E34) dudit signal s'effectuant sur une liaison aller à une première fréquence porteuse (f1) et l'émission (E30) du ou des message(s) de réponse par le groupe (G) de terminaux satellite s'effectuant sur une liaison retour à une deuxième fréquence porteuse (f2) différente de la première.

11. Procédé selon la revendication 9 ou 10, **caractérisé en ce que** l'étape d'émission (E34) est effectuée par une unité de gestion (52) entre, ou à, la passerelle (10) et un routeur (6) qui émet lesdits paquets de données (DP) en mode de pluri-transmission vers les terminaux (TS1-TSr).

12. Procédé selon la revendication 11, **caractérisé en ce que** l'unité de gestion (52) fonctionne de manière transparente vis-à-vis du routeur (6), transmettant à ce dernier transmet au routeur (6) au moins un des messages de réponse reçus du groupe (G) de terminaux (TS1-TSr).

13. Procédé selon la revendication 9 ou 10, **caractérisé en ce que** l'étape d'émission (E34) est réalisée par des moyens (6') fonctionnellement intégrés à un routeur (6) qui émet les paquets de données (DP) de pluri-transmission vers les terminaux (TS1-TSr).

14. Dispositif de gestion destiné à intervenir dans un système de communication de paquets de données (DP) en mode de pluri-transmission selon lequel les paquets sont émis depuis un côté émission (E) d'un support de transmission (80) et reçus par des terminaux (TS1-TSr) à un côté réception (R) de ce support, le support physique de transmission ne permettant pas l'écoute mutuelle entre les terminaux, dans laquelle gestion on émet (E20) un message d'interrogation vers les terminaux afin de déterminer la présence d'un groupe actif (G) de terminaux en fonction de la réception (E32) d'au moins un message de réponse provenant d'un terminal de ce groupe,
**caractérisé en ce qu'**il comprend des moyens de retour (6'; 52) pour émettre (E34) depuis ledit côté émission (E) et vers lesdits terminaux (TS1-TSr) un signal indiquant la réception, au côté émission, d'au moins un message de réponse provenant d'un terminal dudit groupe (G) de terminaux, afin que les terminaux n'ayant pas émis de message de réponse puissent agir en conséquence, notamment en interrompant leur propre processus d'émission de réponse.

15. Dispositif selon la revendication 14, **caractérisé en ce qu'**il réalise la gestion conformément au protocole IGMP ("Internet Group Management Protocol"), ledit message d'interrogation étant le message "interrogation d'appartenance" ("membership query") et ledit message de réponse étant le message "rapport d'appartenance" ("membership report")

16. Dispositif selon la revendication 15, **caractérisé en ce que** l'émission d'un message de réponse par un terminal (TS1-TSr) du groupe (G) est régie par le protocole RFC ("Request for Comments") 1112 dudit protocole IGMP.

17. Dispositif selon l'une quelconque des revendications 14 à 16, **caractérisé en ce que** ledit signal émis depuis le côté émission (E) est le retour vers les terminaux (TS1 - TSr) d'au moins un message de réponse provenant d'un terminal dudit groupe (G).

18. Dispositif selon la revendication 17, **caractérisé en ce qu'**il retourne systématiquement vers les terminaux (ST1-STr) chaque message de réponse reçu provenant d'un terminal (TS1-TSr) du groupe (G).

19. Dispositif selon la revendication 17, **caractérisé en ce qu'**il retourne vers les terminaux (ST1-STr) un nombre de messages de réponse reçus inférieur au total des messages de réponse reçus.

20. Dispositif selon la revendication 19, **caractérisé en ce que** le nombre de messages de réponse reçus qu'il retourne est une fraction (1/N) du nombre total des messages de réponse reçus, où N est un nombre fixe ou évolutif.

21. Dispositif selon la revendication 20, **caractérisé en ce qu'**il comprend des moyens pour faire évoluer la valeur N de manière dynamique en fonction des conditions d'utilisation du réseau (80) afin de maintenir sensiblement constant le nombre de messages de réponse reçus retournés pour chaque message d'interrogation émis.

22. Dispositif selon l'une quelconque des revendication 14 à 21, **caractérisé en ce qu'**il émet ledit signal via une passerelle (10) d'une liaison radiofréquence qui sert à diffuser lesdits paquets de données (DP) en pluri-transmission utilisant, pour la réception desdits paquets de données (DP) émis en pluri-transmission par les terminaux du support de transmission, pour lequel cette passerelle est responsable des mécanismes de pluri-transmission de type « pluri-diffusion IGMP », le support de transmission ne permettant pas l'écoute mutuelle entre terminaux

23. Dispositif selon la revendication 22, **caractérisé en ce que** ledit support de transmission est une liaison radiofréquence par satellite (12), lesdits terminaux (ST1-STr) étant des terminaux satellites, l'émission des paquets de données (DP) en pluri-transmission et l'émission (E34) dudit signal s'effectuant sur une liaison aller à une première fréquence porteuse (f1), et l'émission (E30) du ou des message(s) de réponse par le groupe (G) de terminaux satellite s'effectuant sur une liaison retour à une deuxième fréquence porteuse (f2) différente de la première.

24. Dispositif selon la revendication 22 ou 23, **caractérisé en ce qu'**il est implanté entre, ou à, la passerelle (10) et un routeur (6) qui émet lesdits paquets de données (DP) en mode de pluri-transmission vers les terminaux (TS1-TSr).

25. Dispositif selon la revendication 24, **caractérisé en ce qu'**il fonctionne de manière transparente vis-à-vis du routeur (6), transmettant à ce dernier transmet au routeur (6) au moins un des messages de réponse reçus du groupe (G) de terminaux (TS1-TSr).

26. Dispositif selon la revendication 22 ou 23, **caractérisé en ce qu'**il est fonctionnellement intégré à un routeur (6) qui émet les données de pluri-transmission vers les terminaux (TS1-TSr).

27. Routeur (6, 6'), **caractérisé en ce qu'**il intègre un dispositif selon l'une quelconque des revendications 14 à 26.
